(19) Europäisches Patentamt / European Patent Office / Office européen des brevets

(11) **EP 2 759 564 A1**

(12) **EUROPEAN PATENT APPLICATION**
published in accordance with Art. 153(4) EPC

(43) Date of publication:
**30.07.2014  Bulletin 2014/31**

(21) Application number: **12832981.0**

(22) Date of filing: **18.09.2012**

(51) Int Cl.:
**C08J 9/04** (2006.01)   **B32B 5/18** (2006.01)
**B32B 27/00** (2006.01)   **C08K 5/14** (2006.01)
**C08K 5/33** (2006.01)   **C08L 23/16** (2006.01)
**C08L 71/02** (2006.01)   **C09K 3/10** (2006.01)
**G10K 11/16** (2006.01)   **G10K 11/162** (2006.01)

(86) International application number:
**PCT/JP2012/073820**

(87) International publication number:
**WO 2013/042656 (28.03.2013 Gazette 2013/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.09.2011   JP 2011206296
21.09.2011   JP 2011206297
21.09.2011   JP 2011206298
05.09.2012   JP 2012195394**

(71) Applicant: **Nitto Denko Corporation
Ibaraki-shi, Osaka  567-8680 (JP)**

(72) Inventors:
• **IWASE, Takayuki**
  **Ibaraki-shi**
  **Osaka 567-8680 (JP)**
• **HIRAI, Bunta**
  **Ibaraki-shi**
  **Osaka 567-8680 (JP)**

(74) Representative: **Schwabe - Sandmair - Marx
Patentanwälte
Stuntzstraße 16
81677 München (DE)**

(54) **SOUND INSULATING MATERIAL AND SEALING MATERIAL**

(57)   A sound insulating material is obtained by foaming a rubber composition containing an ethylene-propylene-diene rubber. The content ratio of a sulfur atom calculated by a fluorescent X-ray measurement, based on mass, is 1000 ppm or less. The sound insulating material has a 50 % compressive load value of 0.1 N/cm$^2$ or more and 10 N/cm$^2$ or less. The sound insulating material has an air permeability of 10 cm$^3$/min/cm$^2$ or less.

FIG.1

1

EP 2 759 564 A1

**Description**

Technical Field

The present invention relates to a sound insulating material and a sealing material, to be specific, to a sound insulating material and a sealing material including the sound insulating material.

Background Art

As a sound insulating material for various industrial products, an EPDM foamed material obtained by foaming an ethylene-propylene-diene rubber (hereinafter, may be abbreviated as an EPDM) has been conventionally known.

An EPDM foamed material is generally produced by foaming an EPDM with a foaming agent and cross-linking the EPDM with sulfur. When the EPDM is cross-linked with the sulfur, however, there may be a case where depending on a sound insulating object, the sound insulating object is corroded by the sulfur that remains in the EPDM foamed material.

Thus, in order to reduce the corrosive properties, for example, an EPDM foamed material obtained by foaming a rubber composition containing an EPDM, a quinoid-based cross-linking agent, and an organic peroxide-based cross-linking agent and furthermore, a cross-linking auxiliary (a vulcanizing retardant) such as thiazoles and thioureas has been proposed (ref: for example, the following Patent Document 1).

In the EPDM foamed material described in the following Patent Document 1, the content proportion of a sulfur atom therein is suppressed and the corrosive properties are capable of being reduced.

Prior Art Document

Patent Document

Patent Document 1: Japanese Unexamined Patent Publication No. 2008-208256

Summary of the Invention

Problems to be solved by the Invention

On the other hand, for example, when a gap formed by the sound insulating object is sealed by the EPDM foamed material as the sound insulating material, the flexibility is desired to be improved in order to sufficiently ensure the fittability, the followability to irregularities, and the like with respect to the sound insulating object.

In the EPDM foamed material described in the above-described Patent Document 1, however, by allowing a cross-linking auxiliary to contain a sulfur atom, the corrosion resistance may be insufficient under severe use conditions. Also, in the EPDM foamed material described in the above-described Patent Document 1, the above-described flexibility may be insufficient.

Furthermore, the EPDM foamed material is desired to have further higher sound insulating properties. The sound insulating properties having the properties of not allowing sound to be transmitted therethrough are advantageous. The higher the density of a foamed material is, the better the sound insulating properties are. On the other hand, in order to improve the flexibility, the density is required to be reduced. In such a case, the sound insulating properties are reduced, so that having both the flexibility and the sound insulating properties is difficult.

It is an object of the present invention to provide a sound insulating material that is capable of achieving a reduction in the corrosive properties, has excellent flexibility, and has high sound insulating properties and a sealing material including the sound insulating material.

Solution to the Problems

In order to achieve the above-described object, a sound insulating material of the present invention is obtained by foaming a rubber composition containing an ethylene-propylene-diene rubber, wherein the content ratio of a sulfur atom calculated by a fluorescent X-ray measurement, based on mass, is 1000 ppm or less, the sound insulating material has a 50 % compressive load value of 0.1 $N/cm^2$ or more and 10 $N/cm^2$ or less, and the sound insulating material has an air permeability of 10 $cm^3/min/cm^2$ or less.

In the sound insulating material of the present invention, it is preferable that the content ratio of sulfur $S_8$ calculated based on the measurement result of a gel permeation chromatography, based on mass, is 100 ppm or less.

In the sound insulating material of the present invention, it is preferable that the sound insulating material has a water absorption of 200 mass % or less.

In the sound insulating material of the present invention, it is preferable that the sound insulating material has an apparent density of 0.20 g/cm$^3$ or less.

In the sound insulating material of the present invention, it is preferable that the rubber composition further contains a quinoid compound and the quinoid compound is a derivative of p-quinonedioxime.

In the sound insulating material of the present invention, it is preferable that the rubber composition further contains a cross-linking auxiliary and the cross-linking auxiliary contains a polyol.

In the sound insulating material of the present invention, it is preferable that the polyol is a polyethylene glycol.

In the sound insulating material of the present invention, it is preferable that the rubber composition further contains an organic peroxide.

In the sound insulating material of the present invention, it is preferable that the ethylene-propylene-diene rubber has long chain branching.

A sealing material of the present invention includes a sound insulating material and a pressure-sensitive adhesive layer provided on a surface of the sound insulating material, wherein the sound insulating material is obtained by foaming a rubber composition containing an ethylene-propylene-diene rubber, and the content ratio of a sulfur atom in the sound insulating material calculated by a fluorescent X-ray measurement, based on mass, is 1000 ppm or less, the sound insulating material has a 50 % compressive load value of 0.1 N/cm$^2$ or more and 10 N/cm$^2$ or less, and the sound insulating material has an air permeability of 10 cm$^3$/min/cm$^2$ or less.

Effect of the Invention

The sound insulating material of the present invention is obtained by foaming a rubber composition containing an ethylene-propylene-diene rubber and the content ratio of a sulfur atom calculated by a fluorescent X-ray measurement, based on mass, is not more than a specific value, so that the corrosive properties are reduced and the 50 % compressive load value is within a specific range, so that the flexibility is excellent.

Furthermore, the air permeability is not more than a specific value, so that the sound insulating properties are improved.

Thus, when the sound insulating material is used, corrosion of a sound insulating object is suppressed and a gap between the sound insulating objects is capable of being sealed with excellent fittability and excellent followability to irregularities.

The sealing material of the present invention includes the above-described sound insulating material, so that the corrosion of the sound insulating object is suppressed and the sound insulating material is capable of being surely brought into tight contact with the sound insulating object and in this way, a gap between the sound insulating objects is capable of being surely filled to be brought into tight contact with the sound insulating material.

Brief Description of the Drawings

[FIG. 1] FIG. 1 shows a schematic configuration view illustrating one embodiment of a sound insulating material of the present invention.
[FIG. 2] FIG. 2 shows a schematic sectional view describing an evaluation method of the sound insulating properties.

Embodiment of the Invention

A sound insulating material of the present invention is obtained by foaming a rubber composition containing an EPDM. That is, the sound insulating material is obtained as an EPDM foamed material.

The sound insulation is a function (role) of effectively preventing transmission of sound toward the downstream side in a transmission direction after the sound transmits through (passes through) the sound insulating material or by-passes the sound insulating material, which are caused by blocking of the sound by the sound insulating material, when the sound insulating material is disposed at a midway position in the transmission direction where the sound is transmitted from a sound source. The sound insulating material and the sound insulating properties are a member and properties, respectively, capable of the above-described sound insulation.

The EPDM is a rubber obtained by copolymerization of ethylene, propylene, and dienes. The further copolymerization of the dienes, in addition to the ethylene and the propylene, allows introduction of an unsaturated bond and enables cross-linking with a cross-linking agent to be described later.

Examples of the dienes include 5-ethylidene-2-norbornene, 1,4-hexadiene, and dicyclopentadiene. These dienes can be used alone or in combination of two or more.

A content of the dienes (a diene content) in the EPDM is, for example, 1 mass % or more, preferably 2 mass % or more, or more preferably 3 mass % or more, and is, for example, 20 mass % or less, preferably 20 mass % or less, or more preferably 15 mass % or less.

When the content of the dienes is not less than the above-described lower limit, surface shrinkage of the sound insulating material is capable of being prevented. When the content of the dienes is within the above-described range, occurrence of a crack in the sound insulating material is capable of being prevented.

A preferable example of the EPDM includes an EPDM having long chain branching.

A method for introducing a long branched chain into the EPDM is not particularly limited and a known method such as polymerization with a metallocene catalyst is used.

To be specific, the EPDM is produced with a catalyst such as a Ziegler-Natta catalyst or a metallocene catalyst. Preferably, in view of obtaining a long branched chain, the EPDM is produced with a metallocene catalyst.

When the EPDM has long chain branching, the elongational viscosity is increased due to the entanglement of the side chain, so that the rubber composition is capable of being excellently foamed and having flexibility.

Preferably, the rubber composition contains a cross-linking agent and a foaming agent.

Examples of the cross-linking agent include a quinoid compound and an organic peroxide.

The quinoid compound is an organic compound (a quinoid-based cross-linking agent) having a quinoid structure. Examples thereof include p-quinonedioxime, poly-p-dinitrosobenzene, and a derivative thereof. To be specific, an example of the derivative of the p-quinonedioxime includes p,p'-dibenzoylquinonedioxime.

These quinoid compounds can be used alone or in combination of two or more.

As the quinoid compound, preferably, a derivative of p-quinonedioxime is used, or more preferably, p,p'-dibenzoylquinonedioxime is used.

When the derivative of the p-quinonedioxime is used as the quinoid compound, the rubber composition is cross-linked with the derivative of the p-quinonedioxime, so that the content proportion of a sulfur atom is capable of being reduced and in this way, a reduction in the corrosive properties is achieved and excellent foaming properties are capable of being ensured.

The mixing ratio of the quinoid compound with respect to 100 parts by mass of the EPDM is, for example, 0.05 parts by mass or more, or preferably 0.5 parts by mass or more, and is, for example, 30 parts by mass or less, preferably 20 parts by mass or less, more preferably 10 parts by mass or less, or further more preferably 5 parts by mass or less. Among all, when the derivative of the p-quinonedioxime is used, the mixing ratio thereof with respect to 100 parts by mass of the EPDM is, for example, 0.05 parts by mass or more, or preferably 0.5 parts by mass or more, and is, for example, 20 parts by mass or less, preferably 10 parts by mass or less, or more preferably 5 parts by mass or less.

The organic peroxide is an organic compound (an organic peroxide-based cross-linking agent) having a peroxide structure.

To be specific, examples thereof include dicumyl peroxide, dimethyl di(t-butylperoxy)hexane, 1,1-di(t-butylperoxy)cyclohexane, and $\alpha,\alpha$'-di(t-butylperoxy)diisopropyl benzene.

These organic peroxides can be used alone or in combination of two or more.

The mixing ratio of the organic peroxide with respect to 100 parts by mass of the EPDM is, for example, 0.05 parts by mass or more, preferably 0.5 parts by mass or more, or more preferably 1 part by mass or more, and is, for example, 20 parts by mass or less, preferably 15 parts by mass or less, more preferably 10 parts by mass or less, further more preferably 5 parts by mass or less, or particularly preferably 2 parts by mass or less.

These cross-linking agents can be used alone or in combination of two or more. As the cross-linking agent, preferably, a quinoid compound and an organic peroxide are used in combination.

When the quinoid compound and the organic peroxide are used in combination, the cross-linking on the surface of the sound insulating material is capable of being sufficiently ensured, so that the occurrence of tackiness on the surface is capable of being reduced.

When the quinoid compound and the organic peroxide are used in combination, in the mixing ratio thereof, the ratio of the organic peroxide with respect to 100 parts by mass of the quinoid compound is, for example, 1 part by mass or more, or preferably 10 parts by mass or more, and is, for example, 500 parts by mass or less, preferably 200 parts by mass or less, more preferably 100 parts by mass or less, or further more preferably 50 parts by mass or less.

Examples of the foaming agent include an organic foaming agent and an inorganic foaming agent.

Examples of the organic foaming agent include an azo foaming agent such as azodicarbonamide (ADCA), barium azodicarboxylate, azobisisobutylonitrile (AIBN), azocyclohexylnitrile, and azodiaminobenzene; an N-Nitroso foaming agent such as N,N'-dinitrosopentamethylenetetramine (DTP), N,N'-dimethyl-N,N'-dinitrosoterephthalamide, and trinitrosotrimethyltriamine; a hydrazide foaming agent such as 4,4'-oxybis(benzenesulfonylhydrazide) (OBSH), paratoluenesulfonylhydrazide, diphenylsulfone-3,3'-disulfonylhydrazide, 2,4-toluenedisulfonylhydrazide, p,p-bis(benzenesulfonylhydrazide)ether, benzene-1,3-disulfonylhydrazide, and allylbis(sulfonylhydrazide); a semicarbazide foaming agent such as p-toluylenesulfonylsemicarbazide and 4,4'-oxybis(benzenesulfonylsemicarbazide); a fluorinated alkane foaming agent such as trichloromonofluoromethane and dichloromonofluoromethane; a triazole-based foaming agent such as 5-morpholyl-1,2,3,4-thiatriazole; and other known organic foaming agents. Also, an example of the organic foaming agent includes thermally expansive microparticles in which a heat-expandable substance is encapsulated in a microcapsule. An example of the thermally expansive microparticles can include a commercially available product such as Microsphere (trade name, manufactured by Matsumoto Yushi-Seiyaku Co., Ltd.).

Examples of the inorganic foaming agent include hydrogencarbonate such as sodium hydrogen carbonate and ammonium hydrogen carbonate; carbonate such as sodium carbonate and ammonium carbonate; nitrite such as sodium nitrite and ammonium nitrite; borohydride salt such as sodium borohydride; azides; and other known inorganic foaming agents. Preferably, an azo foaming agent is used. These foaming agents can be used alone or in combination of two or more.

The mixing ratio of the foaming agent with respect to 100 parts by mass of the EPDM is, for example, 0.1 parts by mass or more, or preferably 1 part by mass or more, and is, for example, 50 parts by mass or less, or preferably 30 parts by mass or less.

More preferably, the rubber composition contains a cross-linking auxiliary and a foaming auxiliary.

An example of the cross-linking auxiliary includes a cross-linking auxiliary that fails to contain a sulfur atom in a molecule. To be specific, examples thereof include a monohydric alcohol such as ethanol, a dihydric alcohol such as ethylene glycol, a trihydric alcohol such as glycerine, and a polyol (polyoxyalkylene glycol) such as polyethylene glycol and polypropylene glycol. The polyol has a number average molecular weight of, for example, 200 or more, preferably 300 or more, or more preferably 1000 or more, and of, for example, 100000 or less, preferably 10000 or less, or more preferably 5000 or less.

These cross-linking auxiliaries can be used alone or in combination of two or more.

As the cross-linking auxiliary, preferably, a polyol is used, or more preferably, a polyoxyalkylene glycol is used.

Among all, when the derivative of the p-quinonedioxime is used as the quinoid compound, preferably, a polyethylene glycol is used.

When the polyethylene glycol is used as the polyol, the rubber composition is capable of being excellently cross-linked, so that excellent foaming properties are capable of being ensured.

The mixing ratio of the cross-linking auxiliary with respect to 100 parts by mass of the EPDM is, for example, 0.01 parts by mass or more, preferably 0.02 parts by mass or more, or more preferably 0.06 parts by mass or more, and is, for example, 20 parts by mass or less, preferably 15 parts by mass or less, or more preferably 10 parts by mass or less. The mixing ratio of the cross-linking auxiliary with respect to 100 parts by mass of the cross-linking agent is, for example, 100 parts by mass or less, or preferably 40 parts by mass or less, and is, for example, 1 part by mass or more, or preferably 10 parts by mass or more.

Examples of the foaming auxiliary include a urea foaming auxiliary, a salicylic acid foaming auxiliary, a benzoic acid foaming auxiliary, and a metal oxide (for example, a zinc oxide and the like). Preferably, a urea foaming auxiliary and a metal oxide are used.

These foaming auxiliaries can be used alone or in combination of two or more. Preferably, a urea foaming auxiliary and a metal oxide are used in combination.

The mixing ratio of the foaming auxiliary with respect to 100 parts by mass of the EPDM is, for example, 0.5 parts by mass or more, or preferably 1 part by mass or more, and is, for example, 20 parts by mass or less, or preferably 10 parts by mass or less. When the urea foaming auxiliary and the metal oxide are used in combination, the mixing ratio of the urea foaming auxiliary with respect to 100 parts by mass of the metal oxide is, for example, 10 parts by mass or more, or preferably 20 parts by mass or more, and is, for example, 200 parts by mass or less, or preferably 100 parts by mass or less.

The rubber composition can appropriately contain a polymer other than the EPDM, a processing auxiliary, a pigment, a flame retardant, a filler, a softener, or the like as required.

Examples of the polymer other than the EPDM include a rubber-based polymer and a non-rubber-based polymer. Examples of the rubber-based polymer include a rubber-based copolymer (for example, α-olefin (such as butene-1)-dicyclopentadiene, ethylidene norbornene, and the like) having a cyclic or acyclic polyene having non-conjugated double bonds as a component, an ethylene-propylene rubber, a silicone rubber, a fluororubber, an acrylic rubber, a polyurethane rubber, a polyamide rubber, a natural rubber, a polyisobutylene rubber, a polyisoprene rubber, a chloroprene rubber, a butyl rubber, a nitrile butyl rubber, a styrene-butadiene rubber, a styrene-butadiene-styrene rubber, a styrene-isoprene-styrene rubber, a styrene-ethylene-butadiene rubber, a styrene-ethylene-butylene-styrene rubber, a styrene-isoprene-propylene-styrene rubber, and a chlorosulfonated polyethylene rubber.

Examples of the non-rubber-based polymer include polyethylene, polypropylene, an acrylic polymer (for example, alkyl poly(meth)acrylate and the like), polyvinyl chloride, an ethylene-vinyl acetate copolymer, polyvinyl acetate, polyamide, polyester, chlorinated polyethylene, a urethane polymer, a styrene polymer, a silicone polymer, and an epoxy resin.

As the polymer other than the EPDM, preferably, a non-rubber-based polymer is used, or more preferably, polyethylene is used. These polymers other than the EPDM can be used alone or in combination of two or more.

The mixing ratio of the polymer other than the EPDM with respect to 100 parts by mass of the EPDM is, for example, 100 parts by mass or less, or preferably 50 parts by mass or less, and is, for example, 1 part by mass or more.

Examples of the processing auxiliary include a stearic acid and esters thereof and a zinc stearate. These processing auxiliaries can be used alone or in combination of two or more. The mixing ratio of the processing auxiliary with respect to 100 parts by mass of the EPDM is, for example, 0.1 parts by mass or more, or preferably 1 part by mass or more, and is, for example, 10 parts by mass or less, or preferably 5 parts by mass or less.

An example of the pigment includes carbon black. The pigment has an average particle size of, for example, 1 $\mu$m or more and 200 $\mu$m or less. The mixing ratio of the pigment with respect to 100 parts by mass of the EPDM is, for example, 1 part by mass or more, or preferably 2 parts by mass or more, and is, for example, 50 parts by mass or less, or preferably 30 parts by mass or less.

Examples of the flame retardant include calcium hydroxide, magnesium hydroxide, and aluminum hydroxide. The flame retardant has an average particle size of, for example, 0.1 $\mu$m or more and 100 $\mu$m or less. These flame retardants can be used alone or in combination of two or more. The mixing ratio of the flame retardant with respect to 100 parts by mass of the EPDM is, for example, 5 parts by mass or more, preferably 10 parts by mass or more, or more preferably 15 parts by mass or more, and is, for example, 300 parts by mass or less, preferably 150 parts by mass or less, or more preferably 50 parts by mass or less.

Examples of the filler include an inorganic filler such as calcium carbonate, magnesium carbonate, silicic acid and salts thereof, clay, talc, mica powders, bentonite, silica, alumina, aluminum silicate, and aluminum powders; an organic filler such as cork; and other known fillers. These fillers can be used alone or in combination of two or more. The mixing ratio of the filler with respect to 100 parts by mass of the EPDM is, for example, 10 parts by mass or more, preferably 50 parts by mass or more, or more preferably 100 parts by mass or more, and is, for example, 300 parts by mass or less, or preferably 200 parts by mass or less.

Examples of the softener include petroleum oils (for example, paraffinic oil, naphthenic oil, drying oils, animal and vegetable oils (for example, linseed oil and the like), aromatic oil, and the like); asphalts; low molecular weight polymers; and organic acid esters (for example, phthalic ester (for example, di-2-ethylhexyl phthalate (DOP) and dibutyl phthalate (DBP)), phosphate ester, higher fatty acid ester, alkyl sulfonate ester, and the like). Preferably, petroleum oils are used, or more preferably, paraffinic oil is used. These softeners can be used alone or in combination of two or more. The mixing ratio of the softener with respect to 100 parts by mass of the EPDM is, for example, 5 parts by mass or more, or preferably 10 parts by mass or more, and is, for example, 100 parts by mass or less, or preferably 50 parts by mass or less.

Furthermore, the rubber composition can contain a known additive at an appropriate proportion as long as it does not damage the excellent effect of the sound insulating material to be obtained in accordance with its purpose and use. Examples of the known additive include a plasticizer, a tackifier, an oxidation inhibitor, an antioxidant, a colorant, and a fungicide.

On the other hand, preferably, the rubber composition fails to contain a vulcanizing retardant containing a sulfur atom S (for example, thiazoles, thioureas, and the like).

When the rubber composition fails to contain a vulcanizing retardant, the content proportion of the sulfur atom S in the sound insulating material is capable of being reduced and a reduction in the corrosive properties is capable of being achieved.

Next, a method for producing the sound insulating material is described.

In order to produce the sound insulating material, first, the above-described components are blended to be kneaded using a kneader, a mixer, a mixing roller, or the like, so that the rubber composition is kneaded as a kneaded material (a kneading step).

In the kneading step, the components can be also kneaded, while being appropriately heated. Also, in the kneading step, for example, components other than a cross-linking agent, a cross-linking auxiliary, a foaming agent, and a foaming auxiliary are first kneaded to prepare a first kneaded material. Thereafter, a cross-linking agent, a cross-linking auxiliary, a foaming agent, and a foaming auxiliary are added to the first kneaded material to be kneaded, so that the rubber composition (a second kneaded material) can be obtained.

The obtained rubber composition (the kneaded material) is extruded into a sheet shape or the like using an extruder (a molding step) and the extruded rubber composition is heated to be foamed (a foaming step).

A heat condition is appropriately selected in accordance with a cross-linking starting temperature of the cross-linking agent to be blended, a foaming temperature of the foaming agent to be blended, or the like. The rubber composition is preheated using, for example, an oven with internal air circulation at, for example, 40°C or more, or preferably 60°C or more, and at, for example, 200°C or less, or preferably 160°C or less for, for example, 1 minute or more, or preferably 5 minutes or more, and for, for example, 60 minutes or less, or preferably 40 minutes or less. After the preheating, the rubber composition is heated at, for example, 450°C or less, preferably 350°C or less, or more preferably 250°C or less, and at, for example, 100°C or more, or preferably 120°C or more for, for example, 5 minutes or more, or preferably 15 minutes or more, and for, for example, 80 minutes or less, or preferably 50 minutes or less.

According to the method for producing the sound insulating material, corrosion of the sound insulating object is suppressed and the sound insulating material that is capable of sealing a gap between the sound insulating objects with excellent fittability and excellent followability to irregularities is capable of being easily and surely produced.

The obtained rubber composition is extruded into a sheet shape using an extruder, while being heated (a molding step) (that is, a rubber composition sheet is fabricated) and the rubber composition in a sheet shape (the rubber composition sheet) is capable of being continuously cross-linked and foamed (a foaming step).

According to this method, the sound insulating material is capable of being produced with excellent production efficiency.

In this way, the rubber composition is foamed and cross-linked, so that the sound insulating material prepared from the EPDM foamed material is capable of being obtained.

According to the method for producing the sound insulating material, the sound insulating material in a desired shape is capable of being easily and surely produced with excellent production efficiency.

The obtained sound insulating material has a thickness of, for example, 0.1 mm or more, or preferably 1 mm or more, and of, for example, 50 mm or less, or preferably 45 mm or less.

The sound insulating material has, for example, an open cell structure (an open cell ratio of 100 %) or a semi-open/semi-closed cell structure (an open cell ratio of, for example, above 0 %, or preferably 10 % or more, and of, for example, less than 100 %, or preferably 98 % or less). Preferably, the sound insulating material has a semi-open/semi-closed cell structure.

When the sound insulating material has a semi-open/semi-closed cell structure, the improvement of the flexibility is capable of being achieved and furthermore, the improvement of the filling properties of the sound insulating material in a gap between the sound insulating objects is capable of being achieved.

The sound insulating material has an average cell size of, for example, 50 $\mu$m or more, preferably 100 $\mu$m or more, or more preferably 200 $\mu$m or more, and of, for example, 1200 $\mu$m or less, preferably 1000 $\mu$m or less, or more preferably 800 $\mu$m or less. By setting the average cell size of the sound insulating material within the above-described range, excellent sealing properties are capable of being obtained, while the sound insulating properties are obtained.

The sound insulating material obtained in this way has a volume expansion ratio (a density ratio before and after foaming) of, for example, two times or more, or preferably five times or more, and of, for example, 30 times or less.

The sound insulating material has an apparent density (in conformity with JIS K 6767 (1999)) of, for example, 0.50 g/cm$^3$ or less, preferably 0.20 g/cm$^3$ or less, or more preferably 0.10 g/cm$^3$ or less, and of, for example, 0.01 g/cm$^3$ or more. When the apparent density of the sound insulating material is within the above-described range, the sound insulating material is capable of being excellently sealed in a gap between the sound insulating objects.

The sound insulating material has a 50 % compressive load value (in conformity with JIS K 6767 (1999)) of, for example, 0.1 N/cm$^2$ or more, preferably 0.15 N/cm$^2$ or more, or more preferably 0.2 N/cm$^2$ or more, and of, for example, 10 N/cm$^2$ or less, preferably 5.0 N/cm$^2$ or less, more preferably 2.5 N/cm$^2$ or less, further more preferably 1.0 N/cm$^2$ or less, or particularly preferably 0.3 N/cm$^2$ or less.

When the 50 % compressive load value of the sound insulating material is within the above-described range, the flexibility of the sound insulating material is capable of being improved and thus, the fittability and the followability to irregularities with respect to the sound insulating object become excellent and the sound insulating properties are capable of being improved.

The sound insulating material has an air permeability (in conformity with JIS L 1096 (2010) A method) of, for example, 10 cm$^3$/min/cm$^2$ or less, preferably 5 cm$^3$/min/cm$^2$ or less, or more preferably 3 cm$^3$/min/cm$^2$ or less, and of, for example, 0 cm$^3$/min/cm$^2$ or more, or preferably 1 cm$^3$/min/cm$^2$ or more.

When the air permeability of the sound insulating material is within the above-described range, the transmission of the sound that is transmitted in the air is capable of being reduced, so that the sound insulating properties of the sound insulating material are capable of being improved.

To be specific, the sound insulating material has a normal incidence transmission loss in a sound insulation evaluation at a measuring frequency of 500 Hz of, for example, 7 dB or more, or preferably 9 dB or more, and of, for example, 50 dB or less; at a measuring frequency of 2000 Hz of, for example, 14 dB or more, or preferably 16 dB or more, and of, for example, 60 dB or less; and at a measuring frequency of 6000 Hz of, for example, 25 dB or more, or preferably 30 dB or more, and of, for example, 80 dB or less. The sound insulation evaluation is described in detail in Examples later.

The sound insulating material has a water absorption of, for example, 200 mass % or less, preferably 150 mass % or less, or more preferably 100 mass % or less, and of, for example, 0.1 mass % or more, or preferably 1 mass % or more. When the water absorption of the sound insulating material is within the above-described range, the transmission of the sound is capable of being reduced, so that the sound insulating properties of the sound insulating material are capable of being further improved. A measurement method of the water absorption is described in detail in Examples later.

The sound insulating material has a tensile strength (the maximum load in a tensile test in conformity with JIS K 6767 (1999)) of, for example, 1.0 N/cm$^2$ or more, or preferably 2.0 N/cm$^2$ or more, and of, for example, 50 N/cm$^2$ or

less, or preferably 30.0 N/cm$^2$ or less. When the tensile strength of the sound insulating material is within the above-described range, the strength of the sound insulating material is capable of being excellent.

The sound insulating material has an elongation (in conformity with JIS K 6767 (1999)) of, for example, 10 % or more, or preferably 150 % or more, and of, for example, 1500 % or less, or preferably 1000 % or less. When the elongation of the sound insulating material is within the above-described range, the strength of the sound insulating material is capable of being excellent.

The content ratio of the sulfur atom S in the sound insulating material, based on mass, is, for example, 1000 ppm or less, preferably 800 ppm or less, or more preferably 500 ppm or less.

The content ratio of the sulfur atom S in the sound insulating material is calculated based on a fluorescent X-ray measurement. The detailed conditions in the fluorescent X-ray measurement are described in detail in Examples later.

When the content proportion of the sulfur atom S in the sound insulating material is not more than the above-described upper limit, the corrosive properties are capable of being reduced.

In the sound insulating material, the content ratio of sulfur $S_8$ calculated based on the measurement result of a gel permeation chromatography is, for example, 100 ppm or less, preferably 50 ppm or less, or more preferably 25 ppm or less.

A calculation method of the sulfur $S_8$ is described in detail in Examples later.

When the content proportion of the sulfur $S_8$ in the sound insulating material is not more than the above-described upper limit, the corrosive properties are capable of being reduced.

The sound insulating material is used to fill a gap between the sound insulating objects that serve as objects for sound insulation. The sound insulating material can have both roles of a role of sound insulation and a role other than the sound insulation such as damping, sound absorption, dust-proof, heat insulation, buffering, or water tight. That is, the sound insulating material can be also used as, for example, a vibration-proof material, a sound absorbing material, a dust-proof material, a heat insulating material, a buffer material, or a water-stop material, each of which has sound insulating properties.

In the sound insulating material, the content proportion of the sulfur atom S calculated based on the fluorescent X-ray measurement is not more than a specific value, so that the corrosive properties are reduced and the 50 % compressive load value is within a specific range, so that the flexibility is also excellent.

Furthermore, the air permeability is within the above-described specific range, so that the sound insulating properties are improved.

Thus, when the sound insulating material is used, corrosion of the sound insulating object is suppressed and a gap between the sound insulating objects is capable of being sealed with excellent fittability and excellent followability to irregularities, so that the sound insulating material is capable of being preferably used as a sealing material.

In order to use the sound insulating material as the sealing material, for example, a sealing material including a pressure-sensitive adhesive layer for attaching the sound insulating material provided on the surface of the sound insulating material is prepared. That is, a sealing material including the sound insulating material and the pressure-sensitive adhesive layer is prepared.

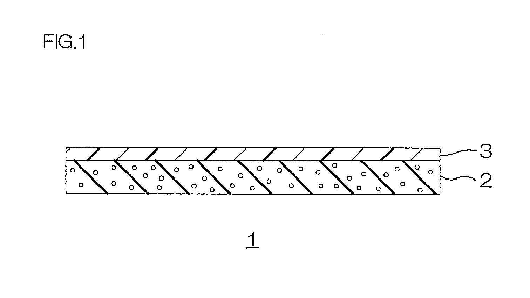

FIG. 1 shows a schematic configuration view illustrating one embodiment of a sound insulating material of the present invention.

That is, in FIG. 1, a sealing material 1 includes a sound insulating material 2 and a pressure-sensitive adhesive layer 3 provided on the surface of the sound insulating material 2.

The pressure-sensitive adhesive layer 3 is formed of, for example, a known pressure-sensitive adhesive.

Examples of the pressure-sensitive adhesive include an acrylic pressure-sensitive adhesive, a rubber pressure-sensitive adhesive, a silicone pressure-sensitive adhesive, a polyester pressure-sensitive adhesive, a urethane pressure-sensitive adhesive, a polyamide pressure-sensitive adhesive, an epoxy pressure-sensitive adhesive, a vinyl alkyl ether pressure-sensitive adhesive, and a fluorine pressure-sensitive adhesive. In addition to these, an example of the pressure-sensitive adhesive also includes a hot melt pressure-sensitive adhesive.

These pressure-sensitive adhesives can be used alone or in combination of two or more.

As the pressure-sensitive adhesive, preferably, an acrylic pressure-sensitive adhesive and a rubber pressure-sensitive adhesive are used.

An example of the acrylic pressure-sensitive adhesive includes a pressure-sensitive adhesive mainly composed of an alkyl (meth)acrylate. The acrylic pressure-sensitive adhesive can be obtained by a known method.

The rubber pressure-sensitive adhesive can be obtained from, for example, a natural rubber and/or a synthetic rubber by a known method. To be specific, examples of a rubber include a polyisobutylene rubber, a polyisoprene rubber, a chloroprene rubber, a butyl rubber, and a nitrile butyl rubber.

A form of the pressure-sensitive adhesive is not particularly limited and various forms such as an emulsion-based pressure-sensitive adhesive, a solvent-based pressure-sensitive adhesive, an oligomer-based pressure-sensitive adhesive, or a solid pressure-sensitive adhesive can be used.

The pressure-sensitive adhesive layer 3 has a thickness of, for example, 10 to 10000 μm, or preferably 50 to

5000 μm.

A method for forming the sealing material 1 is not particularly limited and a known method can be used. To be specific, for example, the pressure-sensitive adhesive layer 3 is laminated on the surface of the sound insulating material 2 by a known method.

The sealing material 1 includes the sound insulating material 2 that is capable of suppressing the corrosion of the sound insulating object and sealing a gap between the sound insulating objects with excellent fittability and excellent followability to irregularities, so that the corrosion of the sound insulating object is suppressed and the sound insulating material 2 is capable of being surely brought into tight contact with the sound insulating object and in this way, a gap between the sound insulating objects is capable of being surely filled to insulate the sound.

Examples of the sound insulating object including the sealing material 1 include an audio component such as a speaker; an engine; a motor; and inverter peripherals.

Examples

While the present invention will be described hereinafter in further detail with reference to Examples and Comparative Examples, the present invention is not limited to these Examples and Comparative Examples.

Examples 1 to 10 and Comparative Examples 1 to 4

(1) Production of Sound Insulating Material

A polymer, a processing auxiliary, a pigment, a flame retardant, a filler, and a softener were blended at a mixing amount described in the mixing formulation shown in Table 1 to be kneaded with a 3L pressurizing kneader, so that a first kneaded material was prepared.

Separately, a cross-linking agent, a cross-linking auxiliary, a foaming agent, and a foaming auxiliary (in the case of Comparative Examples 1, 3, and 4, further a vulcanizing retardant) were blended to be then blended into the first kneaded material. The obtained mixture was kneaded with a 10-inch mixing roll to prepare a rubber composition (a second kneaded material) (a kneading step).

Next, the rubber composition was extruded into a sheet shape having a thickness of about 8 mm using a single screw extruder (45 mmϕ), so that a rubber composition sheet was fabricated (a molding step).

Subsequently, the rubber composition sheet was preheated at 140°C for 20 minutes with an oven with internal air circulation. Thereafter, the temperature of the oven with internal air circulation was increased to 170°C over 10 minutes, so that the rubber composition sheet was heated at 170°C for 10 minutes to be foamed (a foaming step) and in this way, a sound insulating material prepared from an EPDM foamed material was produced.

In Comparative Example 2, the foaming was poor, so that a sound insulating material was not capable of being obtained.

[Table 1]

Table 1

| | | Ex.1 | Ex.2 | Ex.3 | Ex.4 | Ex.5 | Ex.6 | Ex.7 | Ex.8 | Ex.9 | Ex.10 | Comp.Ex.1 | Comp.Ex.2 | Comp.Ex.3 | Comp.Ex.4 |
|---|---|---|---|---|---|---|---|---|---|---|---|---|---|---|---|
| Polymer | EPDM(A) | 100 | 100 | 100 | 100 | 100 | 100 | - | - | 100 | 100 | - | - | - | - |
| | EPDM(B) | - | - | - | - | - | - | 100 | 100 | - | - | - | 100 | 100 | - |
| | EPDM(C) | - | - | - | - | - | - | - | - | - | - | - | - | - | 100 |
| | EPDM+PE | - | - | - | - | - | - | - | - | - | - | 100 | - | - | - |
| | LDPE | - | - | - | - | - | - | - | - | - | - | - | - | - | 20 |
| Processing Auxiliary | Stearic Acid | 3 | 3 | 3 | 3 | 3 | 3 | 3 | 3 | 3 | 3 | 3 | 3 | 3 | 3 |
| Pigment | Carbon Black | 10 | 10 | 10 | 10 | 10 | 10 | 10 | 10 | 10 | 10 | 10 | 10 | 10 | 10 |
| Flame Retardant | Aluminum Hydroxide (A) | - | - | - | - | - | - | - | - | - | - | - | - | - | 30 |
| | Aluminum Hydroxide (B) | 15 | 15 | 15 | 15 | 15 | 15 | - | - | 15 | 15 | 30 | - | - | - |
| | Magnesium Hydroxide | 15 | 15 | 15 | 15 | 15 | 15 | 30 | 30 | 15 | 15 | - | 30 | - | - |
| Filler | Calcium Carbonate | 150 | 150 | 150 | 150 | 150 | 150 | 150 | 150 | 150 | 150 | 150 | 150 | 200 | 150 |
| Softener | Paraffinic Oil | 30 | 30 | 30 | 30 | 30 | 30 | 35 | 35 | 30 | 30 | 35 | 35 | 35 | 35 |
| Cross-Linking Agent | p-quinonedioxime | - | - | - | - | - | - | - | - | - | - | - | - | 0.4 | 1 |
| | p,p'-dibenzoylquinonedioxime | 2.8 | 3 | 2.8 | 2.8 | 3 | 3.25 | 3 | 6 | 3 | 3 | - | - | - | 1 |
| | α,α'-di(t-butylperoxy)diisopropylbenzene | 1 | 1 | 1.5 | - | 1 | 1 | 4 | 0.5 | 1 | 1 | - | 4 | - | - |
| | Dicumyl Peroxide | - | - | - | - | - | - | - | - | - | - | - | - | - | 1 |
| | Sulfur $S_8$ | - | - | - | - | - | - | - | - | - | - | 2.4 | - | - | - |
| Cross-Linking Auxiliary | Polyethylene Glycol | 0.8 | 1 | 0.8 | 1 | 0.5 | 0.3 | - | 3 | 1 | 1 | - | - | - | - |
| Foaming Agent | ADCA | 20 | 25 | 20 | 20 | 20 | 20 | 20 | 20 | 20 | 20 | 20 | 20 | 20 | 20 |
| Foaming Auxiliary | Zinc Oxide | 5 | 5 | 5 | 5 | 5 | 5 | 5 | 5 | 5 | 5 | 5 | 5 | 5 | 5 |
| | Urea-Based | 2 | 2.5 | 2 | 2 | 2 | 2 | 5 | 5 | 2 | 2 | 2 | 5 | 5 | 5 |
| Vulcanizing Retardant | 2-mercaptobenzothiazole | - | - | - | - | - | - | - | - | - | - | 1 | - | - | 0.5 |
| | N,N'-dibutylthiourea | - | - | - | - | - | - | - | - | - | - | 1.5 | - | 1 | - |
| | Zinc Dimethyldithiocarbamate | - | - | - | - | - | - | - | - | - | - | 0.8 | - | - | - |
| | Zinc Diethyldithiocarbamate | - | - | - | - | - | - | - | - | - | - | 0.8 | - | - | - |

Values in Table 1 show the number of blended parts in each of the components.

For the abbreviations shown in Table 1, the details are given in the following.

EPDM (A): EPT 8030M, containing long chain branching, a diene (5-ethylidene-2-norbornene) content of 9.5 mass %, catalyst: a metallocene catalyst, manufactured by Mitsui Chemicals, Inc.

EPDM (B): EPT 1045, a diene (dicyclopentadiene) content of 5.0 mass %, catalyst: a Ziegler-Natta catalyst, manufactured by Mitsui Chemicals, Inc.

EPDM (C): EPT 4045, a diene (5-ethylidene-2-norbornene) content of 8.1 mass %, catalyst: a Ziegler-Natta catalyst, manufactured by Mitsui Chemicals, Inc.

EPDM+PE: Eptalloy PX-047, a diene (5-ethylidene-2-norbornene) content of 4.5 mass %, polyethylene blend type, a polyethylene content of 20 PHR, catalyst: a Ziegler-Natta catalyst, manufactured by Mitsui Chemicals, Inc.

LDPE: Low density polyethylene

Stearic Acid: stearic acid powder "Sakura", manufactured by NOF CORPORATION

Carbon Black: Asahi #50, an average particle size of 80 $\mu$m, manufactured by ASAHI CARBON CO., LTD.

Aluminum Hydroxide (A): HIGILITE H-32, an average particle size of 5 to 10 $\mu$m, manufactured by SHOWA DENKO K.K.

Aluminum Hydroxide (B): HIGILITE H-42, an average particle size of 1 to 2 $\mu$m, manufactured by SHOWA DENKO K.K.

Magnesium Hydroxide: KISUMA 5A, an average particle size of 1 $\mu$m, manufactured by Kyowa Chemical Industry Co., Ltd.

Calcium Carbonate: N heavy calcium carbonate, manufactured by MARUO CALCIUM CO., LTD.

Paraffinic Oil: Diana Process Oil PW-380, manufactured by Idemitsu Kosan Co., Ltd.

p-quinonedioxime: VULNOC GM, manufactured by OUCHI SHINKO CHEMICAL INDUSTRIAL CO., LTD.

p,p'-dibenzoylquinonedioxime: VULNOC DGM, manufactured by OUCHI SHINKO CHEMICAL INDUSTRIAL CO., LTD.

$\alpha,\alpha$'-di(t-butylperoxy)diisopropyl benzene: PERBUTYL P-40MB, manufactured by NOF CORPORATION

Dicumyl Peroxide: PERCUMYL D, manufactured by NOF CORPORATION

Sulfur $S_8$: ALPHAGRAN S-50EN, manufactured by Touchi Co., Ltd.

Polyethylene Glycol: PEG 4000S, a number average molecular weight of 3400

ADCA: AC#LQ, azodicarbonamide, manufactured by EIWA CHEMICAL IND. CO., LTD.

Zinc Oxide: second-class zinc oxide, manufactured by MITSUI MINING & SMELTING CO., LTD.

Urea-based: CELLPASTE K5, manufactured by EIWA CHEMICAL IND. CO., LTD.

2-Mercaptobenzothiazole: NOCCELER M, manufactured by OUCHI SHINKO CHEMICAL INDUSTRIAL CO., LTD.

N,N'-dibutylthiourea: NOCCELER BUR, manufactured by OUCHI SHINKO CHEMICAL INDUSTRIAL CO., LTD.

Zinc Dimethyldithiocarbamate: NOCCELER PZ, manufactured by OUCHI SHINKO CHEMICAL INDUSTRIAL CO., LTD.

Zinc Diethyldithiocarbamate: NOCCELER EZ, manufactured by OUCHI SHINKO CHEMICAL INDUSTRIAL CO., LTD.

(2) Measurement of Properties

The properties of each of the sound insulating materials in Examples 1 to 10 and Comparative Examples 1, 3, and 4 were measured by a method shown in the following. The results are shown in Table 2.

<Apparent Density>

The apparent density of each of the sound insulating materials was measured in conformity with JIS K 6767 (1999). To be specific, a skin layer of each of the sound insulating materials was removed and a test piece having a thickness of about 10 mm was prepared. Thereafter, the mass was measured to calculate the mass per unit volume (the apparent density).

<50 % Compressive Load Value>

The 50 % compressive load value of each of the sound insulating materials was measured in conformity with JIS K 6767 (1999). To be specific, a skin layer of each of the sound insulating materials was removed and a test piece having a thickness of about 10 mm was prepared. Thereafter, the test piece was compressed by 50 % at a compression rate of 10 mm/min using a compression testing machine to measure a 50 % compressive load value after 10 seconds of compression.

<Air Permeability>

The air permeability of each of the sound insulating materials was measured in conformity with JIS L 1096 (2010) A method. To be specific, a skin layer of each of the sound insulating materials was removed and a test piece having a thickness of about 10 mm was prepared. Thereafter, the test piece was stamped out into a disk shape having a diameter of 80 mm and a thickness of 10 mm to obtain a sample for measurement. The air permeability of the sample for measurement was measured using an air permeability measurement device (3C-200, manufactured by DAIEI KAGAKU SEIKI MGF. co., ltd.).

<Tensile Strength and Elongation>

The tensile strength and the elongation of each of the sound insulating materials were measured in conformity with JIS K 6767 (1999). To be specific, a skin layer of each of the sound insulating materials was removed and a test piece having a thickness of about 10 mm was prepared. Thereafter, the test piece was stamped out using a dumbbell No. 1 to obtain a sample for measurement. The sample for measurement was pulled with a tensile testing machine at a tension rate of 500 mm/min to measure the load (the tensile strength) and the elongation of the sample for measurement at the time of being cut in a dumbbell shaped parallel portion.

<Corrosive Properties of Silver>

0.5 g of each of the sound insulating materials was put into a 100-mL sealed bottle. A polished and cleansed silver plate was attached to the inner side of a lid of the sealed bottle. The resulting bottle was put into a thermostatic chamber at 85°C for seven days and a presence or absence of corrosion of the silver plate was checked. When the corrosion was not confirmed, the result was evaluated as "Absence". When the corrosion was confirmed, the result was evaluated as "Presence".

<Content Proportion of Sulfur Atom S (Fluorescent X-Ray Measurement)>

Each of the sound insulating materials was cut into pieces each having an appropriate size. Four pieces thereof were stacked and were subjected to a fluorescent X-ray measurement (XRF) (measurement size: 30 mmϕ). A device and conditions for the XRF are shown in the following.

XRF device: manufactured by Rigaku Corporation, ZXS100e
X-ray source: vertical Rh tube
Analysis area: 30 mmϕ
Analysis range of elements: B to U

In addition, the quantification was calculated from the proportion in the total atoms that were detected.

<Content Proportion of Sulfur $S_8$ (GPC Measurement)>

The content proportion of Sulfur $S_8$ was calculated based on the measurement result of a gel permeation chromatography (GPC). A process, conditions, a device, and the like are shown in the following.

(Process 1)

Each of the sound insulating materials was finely cut to fabricate test pieces each having an average value of the maximum length of 5 mm. Next, 300 mg of the sound insulating material was weighed and then, 10 ml of THF (tetrahydrofuran) was added thereto using a whole pipette to be allowed to stand overnight.
A THF solution was filtrated with a 0.45 μm membrane filter and the filtrate was subjected to a gel permeation chromatography measurement.

(Process 2)

Separately, the sulfur $S_8$ was dissolved into the THF to adjust the concentration to 1000 μg/ml and the THF solution was allowed to stand overnight. Thereafter, the THF solution was filtrated with the 0.45 μm membrane filter.
The filtrate was diluted at predetermined concentrations to fabricate reference solutions. The reference solutions were subjected to the gel permeation chromatography measurement and the calibration curve was drawn from each of the peak area values to be obtained.

(Process 3)

The mass of the sulfur $S_8$ in the test piece in the Process 1 was obtained by a calibration curve method based on the calibration curve drawn in the Process 2. The obtained value was divided by the mass (300 mg) of the test piece, so that the content proportion of the sulfur $S_8$ in the test piece was calculated.

<Measurement Device and Measurement Conditions>

GPC device: TOSOH HLC-8120 GPC
Column: TSKgel Super HZ2000/HZ2000/HZ1000/HZ1000
Column size: 6.0 mmI.D.×150 mm
Elute: THF
Flow rate: 0.6 ml/min
Detector: UV (280 nm)
Column temperature: 40°C
Injection amount: 20 μl
Detection limit: 10 ppm

<Water Absorption>

Each of the sound insulating materials was cut into a flat plate shape having a length of 50 mm, a width of 50 mm, and a thickness of 10 mm. Thereafter, a 1-kg weight was put on the resulting test piece to be immersed at a depth of 100 mm. Then, immediately after the immersion, the weight was taken out and the test piece was immersed for three minutes.
The water absorption of the sound insulating material was calculated from the mass thereof before or after the immersion by the following calculation formula.

$$W_a = (W_1 - W_o) / W_o \times 100$$

$W_a$: Water absorption (mass %)
$W_1$: Mass after immersion
$W_o$: Mass before immersion

<Average Cell Size>

An enlarged image of a bubble portion of a foamed material in each of the sound insulating materials was taken in with a digital microscope (VH-8000, manufactured by KEYENCE CORPORATION) and the image was analyzed using an image analysis software (Win ROOF, manufactured by MITANI CORPORATION), so that an average cell size (μm) of the sound insulating material was obtained.

<Sound Insulating Properties (Normal Incidence Transmission Loss)>

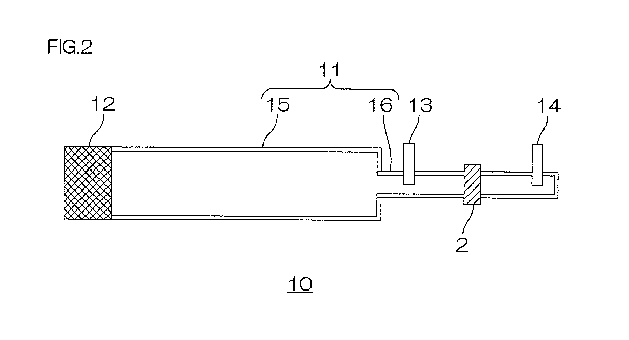

FIG. 2 shows a schematic sectional view describing an evaluation method of the sound insulating properties.
The normal incidence transmission loss of each of the sound insulating materials was measured in conformity with "Determination of sound absorption coefficient in impedance tubes-Part 1: Method using standing wave ratio (JIS A 1405-1: 1996)" using a 4206-T-type acoustic tube (manufactured by Bruel & Kjaer Sound & Vibration Measurement A/S.) 10 shown in FIG. 2 and a software for measurement (PULSE Material Testing Type 7758, manufactured by Bruel & Kjaer Sound & Vibration Measurement A/S.).
That is, the T-type-acoustic tube 10 is provided with an acoustic tube 11, a sound source portion (speaker) 12 that is provided at one (left) end portion of the acoustic tube 11, and a first microphone 13 and a second microphone 14 that are provided at the other (right) side of the acoustic tube 11.
The acoustic tube 11 is formed into a straight tube extending in a right-left direction and integrally includes a large-diameter tube 15 that is disposed at the left side and a small-diameter tube 16 that is connected to the right side of the large-diameter tube 15. The small-diameter tube 16 is formed into a straight tube and has an axis line that is common to that of the large-diameter tube 15. The inner diameter thereof is formed to be smaller than that of the large-diameter tube 15. The right end portion of the small-diameter tube 16 is closed.

The first microphone 13 is disposed at the left side of the small-diameter tube 16 and the second microphone 14 is disposed at the right side of the small-diameter tube 16 at spaced intervals thereto. The first microphone 13 and the second microphone 14 are connected to a software for measurement that is not shown.

The sound insulating material 2 that was cut into a disk shape having a diameter of 29 mm and a thickness of 10 mm was disposed between the first microphone 13 and the second microphone 14 so as to close the inside of the small-diameter tube 16 and so that a thickness direction of the sound insulating material 2 was along the right-left direction.

The normal incidence transmission loss of the sound insulating material 2 was measured at a measuring frequency of 500 to 6000 Hz.

To be specific, the normal incidence transmission loss of the sound insulating material 2 was obtained as a proportion (dB) of the sound intensity collected in the first microphone 13 with respect to the sound intensity collected in the second microphone 14. [Table 2]

Table 2

| | | Ex. 1 | Ex. 2 | Ex. 3 | Ex. 4 | Ex. 5 | Ex. 6 | Ex. 7 | Ex. 8 | Ex. 9 | Ex. 10 | Comp. Ex. 1 | Comp. Ex. 2 | Comp. Ex. 3 | Comp. Ex. 4 |
|---|---|---|---|---|---|---|---|---|---|---|---|---|---|---|---|
| Apparent Density | g/cm³ | 0.096 | 0.089 | 0.096 | 0.095 | 0.094 | 0.092 | 0.165 | 0.133 | 0.101 | 0.114 | 0.090 | | 0.085 | 0.068 |
| 50% Compressive Load Value | N/cm² | 0.18 | 0.18 | 1.96 | 0.21 | 0.19 | 0.19 | 1.12 | 0.50 | 0.20 | 0.28 | 0.35 | | 6.34 | 2.12 |
| Air Permeability | cm³/min/cm² | 3.26 | 2.55 | 0.00 | 1.70 | 5.52 | 3.80 | 0.32 | 0.90 | 1.33 | 2.15 | 78.84 | | 0.00 | 0.00 |
| Tensile Strength | N/cm² | 5.89 | 4.25 | 5.19 | 4.65 | 4.46 | 4.71 | 9.25 | 7.70 | 6.01 | 6.32 | 5.50 | | 7.04 | 4.33 |
| Elongation | % | 288 | 295 | 305 | 333 | 338 | 359 | 250 | 325 | 303 | 325 | 455 | | 265 | 370 |
| Corrosive Properties of Silver | | Absence | Absence | Absence | Absence | Absence | Absence | Absence | Absence | Absence | Absence | Presence | | Absence | Absence |
| Content Ratio of Sulfur Atom S (Fluorescent X-Ray) | ppm | 170 | 150 | 170 | 170 | 190 | 170 | 180 | 180 | 500 | 820 | 7500 | Foaming Failure | 450 | 650 |
| Content Ratio of Sulfur S₈ (GPC) | ppm | N.D. *1 | N.D. *1 | N.D. *1 | N.D. *1 | N.D. *1 | N.D. *1 | N.D. *1 | N.D. *1 | N.D. *1 | N.D. *1 | 3000 | | N.D. *1 | N.D. *1 |
| Water Absorption | mass % | 79 | 70 | 32 | 57 | 104 | 81 | 38 | 47 | 66 | 53 | 381 | | 12 | 15 |
| Average Cell Size | μm | 571 | 571 | 627 | 639 | 653 | 607 | 525 | 317 | 601 | 587 | 505 | | 610 | 645 |
| Sound Insulating Properties (Normal Incidence Transmission Loss) — 500 (Hz) | dB | 12.1 | 11.0 | 9.5 | 11.7 | 11.5 | 13.6 | 9.8 | 7.8 | 10.1 | 9.6 | 8.1 | | 12.8 | - |
| 1000 (Hz) | dB | 13.9 | 13.5 | 20.2 | 15.9 | 14.0 | 15.6 | 20.4 | 19.2 | 15.6 | 14.1 | 13.2 | | 11.4 | - |
| 2000 (Hz) | dB | 15.3 | 14.4 | 17.7 | 17.2 | 16.4 | 19.1 | 18.0 | 18.7 | 17.1 | 16.5 | 12.8 | | 13.6 | - |
| 3000 (Hz) | dB | 20.0 | 20.9 | 21.3 | 24.3 | 19.9 | 24.2 | 20.4 | 16.7 | 20.8 | 19.7 | 13.2 | | 13.1 | - |
| 4000 (Hz) | dB | 24.1 | 26.1 | 27.2 | 32.0 | 23.0 | 28.1 | 27.3 | 22.2 | 28.0 | 27.2 | 16.4 | | 12.5 | - |
| 5000 (Hz) | dB | 27.3 | 29.0 | 32.4 | 39.4 | 25.7 | 30.5 | 30.9 | 26.3 | 31.5 | 30.7 | 19.6 | | 13.1 | - |
| 6000 (Hz) | dB | 28.0 | 30.5 | 40.0 | 39.2 | 26.9 | 31.1 | 36.3 | 28.6 | 38.3 | 36.2 | 23.1 | | 13.7 | - |

*1: Undetectable because of being not more than detection limit

EP 2 759 564 A1

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

Industrial Applicability

The sound insulating material of the present invention is used in a sound insulating object such as an audio component including a speaker, an engine, a motor, and inverter peripherals.

**Claims**

1.  A sound insulating material obtained by foaming a rubber composition containing an ethylene-propylene-diene rubber, wherein
    the content ratio of a sulfur atom calculated by a fluorescent X-ray measurement, based on mass, is 1000 ppm or less,
    the sound insulating material has a 50 % compressive load value of 0.1 $N/cm^2$ or more and 10 $N/cm^2$ or less, and
    the sound insulating material has an air permeability of 10 $cm^3/min/cm^2$ or less.

2.  The sound insulating material according to claim 1, wherein
    the content ratio of sulfur $S_8$ calculated based on the measurement result of a gel permeation chromatography, based on mass, is 100 ppm or less.

3.  The sound insulating material according to claim 1, wherein
    the sound insulating material has a water absorption of 200 mass % or less.

4.  The sound insulating material according to claim 1, wherein
    the sound insulating material has an apparent density of 0.20 $g/cm^3$ or less.

5.  The sound insulating material according to claim 1, wherein
    the rubber composition further contains a quinoid compound and
    the quinoid compound is a derivative of p-quinonedioxime.

6.  The sound insulating material according to claim 1, wherein
    the rubber composition further contains a cross-linking auxiliary and
    the cross-linking auxiliary contains a polyol.

7.  The sound insulating material according to claim 6, wherein
    the polyol is a polyethylene glycol.

8.  The sound insulating material according to claim 1, wherein
    the rubber composition further contains an organic peroxide.

9.  The sound insulating material according to claim 1, wherein
    the ethylene-propylene-diene rubber has long chain branching.

10. A sealing material comprising:

    a sound insulating material and
    a pressure-sensitive adhesive layer provided on a surface of the sound insulating material, wherein
    the sound insulating material is obtained by foaming a rubber composition containing an ethylene-propylene-diene rubber, and
    the content ratio of a sulfur atom in the sound insulating material calculated by a fluorescent X-ray measurement, based on mass, is 1000 ppm or less,
    the sound insulating material has a 50 % compressive load value of 0.1 $N/cm^2$ or more and 10 $N/cm^2$ or less, and
    the sound insulating material has an air permeability of 10 $cm^3/min/cm^2$ or less.

FIG.1

1

FIG.2

10

## INTERNATIONAL SEARCH REPORT

International application No.

PCT/JP2012/073820

### A. CLASSIFICATION OF SUBJECT MATTER

*C08J9/04*(2006.01)i, *B32B5/18*(2006.01)i, *B32B27/00*(2006.01)i, *C08K5/14*
(2006.01)i, *C08K5/33*(2006.01)i, *C08L23/16*(2006.01)i, *C08L71/02*(2006.01)i,
*C09K3/10*(2006.01)i, *G10K11/16*(2006.01)i, *G10K11/162*(2006.01)i

According to International Patent Classification (IPC) or to both national classification and IPC

### B. FIELDS SEARCHED

Minimum documentation searched (classification system followed by classification symbols)
C08J9/04-9/14, B32B5/18, B32B27/00, C08K5/14, C08K5/33, C08L23/16,
C08L71/02, C09K3/10, G10K11/16, G10K11/162

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho    1971-2012   Toroku Jitsuyo Shinan Koho   1994-2012

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2002-179825 A  (Nitto Denko Corp.),<br>26 June 2002 (26.06.2002),<br>claims; paragraphs [0001], [0006], [0009] to<br>[0019], [0028] to [0032]<br>(Family: none) | 1-4,6-8<br>10<br>5,9 |
| X<br>A | JP 2000-159953 A  (Sumitomo Chemical Co., Ltd.),<br>13 June 2000 (13.06.2000),<br>claims; paragraphs [0001], [0004], [0008] to<br>[0028], [0033], [0034], [0036], [0037];<br>examples 1 to 3<br>(Family: none) | 1-4,6-8<br>5,9,10 |
| Y | JP 10-077463 A  (Nitto Denko Corp.),<br>24 March 1998 (24.03.1998),<br>claims; paragraph [0020]<br>(Family: none) | 10 |

[X] Further documents are listed in the continuation of Box C.    [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>05 December, 2012 (05.12.12) | Date of mailing of the international search report<br>18 December, 2012 (18.12.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2012/073820 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-208256 A  (Nitto Denko Corp.), 11 September 2008 (11.09.2008), entire text & US 2008/0207786 A1    & EP 1964864 A1 & CN 101255257 A | 1-10 |
| A | JP 2003-147112 A  (Nitto Denko Corp.), 21 May 2003 (21.05.2003), entire text (Family: none) | 1-10 |
| A | JP 2001-503092 A  (Henkel Teroson GmbH), 06 March 2001 (06.03.2001), entire text & US 6096791 A        & WO 1998/018853 A1 & DE 19644855 A1      & BR 9712691 A & PL 333008 A1        & CZ 9901514 A3 & ZA 9709671 A        & CA 2269834 A1 & KR 10-2000-0052873 A | 1-10 |
| A | JP 55-123630 A  (Mitsui Petrochemical Industries, Ltd.), 24 September 1980 (24.09.1980), entire text (Family: none) | 1-10 |
| P,A | JP 2012-017452 A  (Nitto Denko Corp.), 26 January 2012 (26.01.2012), entire text & EP 2392609 A1          & CN 102268158 A & US 2012/0277337 A1 | 1-10 |

Form PCT/ISA/210 (continuation of second sheet) (July 2009)

## INTERNATIONAL SEARCH REPORT

International application No.

PCT/JP2012/073820

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
      (Stated in extra sheet.)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2012/073820

Continuation of Box No.III of continuation of first sheet(2)

The sound-insulating material which is obtained by foaming a rubber composition that contains an ethylene/propylene/diene rubber and which has a sulfur atom content, as calculated through analysis by fluorescent X-ray spectroscopy, of 1,000 mass ppm or less, a load at 50% compression of 0.1-10 N/cm$^2$, and an air permeability of 10 cm$^3$/min/cm$^2$ or less is known because this sound-insulating material is disclosed in, for example, document 1. Consequently, with respect to the invention in claim 1, that matter is not considered to be a technical matter that makes a contribution over the prior art.

Consequently, since the invention of claim 1 and the inventions of claims 2-10 cannot be considered to share a special technical feature, it is not considered that a group of these inventions are so linked as to form a single general inventive concept.

Document 1: JP 2002-179825 A (Nitto Denko Corp.), 26 June 2002 (26.06.2002)

**EP 2 759 564 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008208256 A